# EUROPÄISCHE PATENTANMELDUNG

(11) **EP 1 237 357 A2**
(43) Veröffentlichungstag der Anmeldung: **04.09.2002**
(21) Anmeldenummer: 02004563.9
(22) Anmeldetag: 27.02.2002
(51) Int. Cl.: H04N 3/15, H04N 5/235, H04N 5/243

(54) **Digitalkamera mit CMOS-Bildsensor verbesserter Dynamik und Verfahren zum Ansteuern eines CMOS-Bildsensors**

(30) Priorität: 02.03.2001 DE 10110108
(71) Anmelder: LENZ, Reimar, 80801 München (DE)
(72) Erfinder: LENZ, Reimar, 80801 München (DE)
(74) Vertreter: Klunker . Schmitt-Nilson . Hirsch

(57) **Zusammenfassung**

Bei einem CMOS-Bildsensor wird zur Verminderung des RESET-Rauschens ein korreliertes Doppelabtasten (Correlated Double Sampling; CDS) durchgeführt: für die Pixel erfolgt nach dem RESET das Erfassen eines ersten Abtastsignals, am Ende eines Belichtungszeitraums wird ein zweiter Abtastwert ermittelt, und es wird ein von dem RESET-Rauschen im wesentlichen befreites Differenzsignal gebildet, indem von dem zweiten Abtastwert der erste Abtastwert subtrahiert wird. Um die mangelhafte Helligkeitsdynamik zu verbessern, wird erfindungsgemäß das erste Abtastsignal erst nach einem gewissen Verzögerungsintervall gewonnen, so daß auch dieses Signal nicht nur eine Rauschkomponente, sondern auch Helligkeitsinformation enthält. Übersteigt das zweite Abtastsignal die Sättigungsgrenze, so wird als Nutzsignal lediglich das entsprechend skalierte erste Abtastsignal hergenommen. Zwar ist in diesem Fall das Nutzsignal mit dem RESET-Rauschen behaftet, allerdings fällt dieses bei großen Helligkeiten kaum ins Gewicht. Man erzielt eine Vervielfachung der Helligkeitsdynamik eines CMOS-Bildsensors.

## Beschreibung

Die Erfindung betrifft eine Digitalkamera mit einem CMOS-Bildsensor mit einer Mehrzahl von Pixeln, die innerhalb eines Belichtungszeitraums jeweils eine von der Helligkeit abhängige Ladung speichern, die unter Steuerung durch eine Steuereinrichtung als Pixelsignal ausgegeben wird, mit einer Korrektureinrichtung, die nach einem Pixel-RESET des Bildsensors aus einem gegen Anfang und einem gegen Ende des Belichtungszeitraums für die Pixel erfaßten ersten bzw. zweiten Abtastwert die Differenz bildet und den um den ersten Abtastwert verminderten zweiten Abtastwert als Nutzsignal ausgibt.

Außerdem betrifft die Erfindung ein Verfahren zum Ansteuern eines CMOS-Bildsensors.

Für beispielsweise digitale Kameras und dergleichen sind CCD-Bildsensoren seit längerer Zeit bekannt. Es gibt ferner CMOS-Bildsensoren, die aber gegenüber CCD-Bildsensoren eine schlechtere Helligkeitsdynamik aufweisen. Unter dem Begriff Helligkeitsdynamik versteht man das Verhältnis aus Sättigungssignalamplitude des belichteten Bildsensors und seiner Rauschsignalamplitude bei unbelichtetem Sensor. Wenn an dieser Stelle nichts anderes gesagt ist, so betreffen die Anmerkungen ein beliebiges Pixel des Bildsensors, bei dem eine Vielzahl von Pixeln in Reihen und Spalten angeordnet ist.

Bei den hier in Rede stehenden Bildsensoren wird in jedem Pixel des Bildsensors eine gewisse Ladungsmenge innerhalb eines bestimmten Belichtungszeitraums angesammelt. Die Ladung wird mit Hilfe eines Kondensators in eine Spannung umgesetzt. Die von einem Pixel aufnehmbare Ladungsmenge ist nach oben begrenzt. Bei vorgegebenem Belichtungszeitraum gibt es eine gewisse Helligkeit, bei der die angesammelte Ladungsmenge gerade die Obergrenze erreicht. Bei größerer Helligkeit wird die Obergrenze für die ansammelbare Ladungsmenge bereits früher erreicht, so daß der am Ende des Belichtungszeitraums erhaltene Pegel des Nutzsignals nicht mehr aussagekräftig über die aufgenommene Lichtmenge ist.

Es gibt mehrere Rauschquellen für einen unbelichteten Sensor. Neben dem (thermischen) Systemrauschen und dem Dunkelstromrauschen gibt es noch das sogenannte RESET-Rauschen, auch als kTC-Rauschen oder kTC-Noise bekannt. Zu Beginn eines Belichtungszeitraumes wird auf die Pixel ein RESET-Signal gegeben, welches bis dahin in dem Pixel gespeicherte Ladungen ableitet. Aber auch unmittelbar nach einem RESET-Vorgang liefert das betreffende Pixel ein Signal, nämlich das Rauschsignal. Dieses kTC-Rauschen stellt den überwiegenden Rauschanteil dar. Bei CMOS-Bildsensoren kommt noch das Umschaltrauschen des Spalten-Multiplexers hinzu. Bei einem belichteten Sensor kommt noch das Photonenrauschen hinzu.

Zusätzlich zu den genannten Rauschsignalen kommt bei einem CMOS-Bildsensor noch eine zeitlich konstante Störquelle hinzu. Diese hat die Form von Dunkelwert-Offsets. Nicht ganz korrekt wird diese Störung häufig auch als "fixed pattern noise" bezeichnet, wenngleich es sich nicht um eine statistische Störquelle, sondern um eine zeitlich konstante Störquelle handelt. Diese Störungen sind von Pixel zu Pixel unterschiedlich und lassen sich in einfacher Weise berücksichtigen, wie unten näher ausgeführt wird.

Um eine Verfälschung des Nutzsignals bei Bildsensoren durch das RESET-Rauschen zu unterdrücken, ist es bekannt, den am Ende des Belichtungszeitraums gewonnenen Signal-Abtastwert zu korrigieren, indem man von diesem Abtastwert einen Rausch-Abtastwert subtrahiert. Zu diesem Zweck wird direkt nach dem RESET-Signal ein erster Abtastwert gewonnen, der in erster Linie dem RESET-Rauschen entspricht. Von dem am Ende des Belichtungszeitraums gewonnenen zweiten Abtastwert wird dann der erste Abtastwert subtrahiert. Da beide Abtastwerte mit dem gleichen RESET-Rauschen behaftet sind, ist das Differenzsignal im wesentlichen von dem RESET-Rauschen befreit.

Zum Stand der Technik wird zum Beispiel auf die US-Patentschriften 5 742 047; 6 111 242; 6 115 066 und 5 877 715 verwiesen. Das oben beschriebene Verfahren der Differenzbildung zur Korrektur des Nutzsignals ist dort auch für CMOS-Bildsensoren beschrieben. Man kann die Subtraktion anhand von Analogsignalen durchführen, möglich ist aber auch ein digitales Verarbeiten der Signale, insbesondere bei CMOS-Bildsensoren, da bei diesen Sensoren für jedes Pixel ein eigener Ladungs-Spannungs-Wandlerkondensator vorhanden ist. Zweckmäßig ist dann ein Bildspeicher zur Speicherung der gesamten Dunkelbildinformation für alle Pixel in digitaler Form. Das mit Hilfe eines Analog-Digital-Wandlers digitalisierte gespeicherte Dunkelbild wird dann pixelweise von dem digitalen Bild entsprechend der am Ende des Belichtungszeitraums durchgeführten Abtastung subtrahiert.

Das oben angesprochene Verfahren mit Korrektur durch Subtraktion zweier Abtastwerte ist aus dem Stand der Technik bekannt, es wird dort mit Correlated Double Sampling (CDS) bezeichnet. Aus dem angegebenen Stand der Technik ist dieses CDS-Verfahren für CMOS-Bildsensoren bereits bekannt. Allerdings ist der für das digitale CDS-Verfahren erforderliche Aufwand derart groß, daß man üblicherweise darauf verzichtet. Aus diesem Grund haben bildgebende Systeme mit CMOS-Sensoren den Ruf geringer Dynamik.

Der Erfindung liegt die Aufgabe zugrunde, eine Digitalkamera der eingangs genannten Art anzugeben, die eine im Vergleich zum Stand der Technik gesteigerte Helligkeitsdynamik besitzt.

Außerdem soll ein Verfahren angegeben werden, das eine Voraussetzung für die Verbesserung der Dynamik eines CMOS-Bildsensors schafft.

Bei einer Digitalkamera der oben genannten Art wird dies dadurch erreicht, daß die Steuereinrichtung die Abtastung für den ersten Abtastwert gegenüber dem RESET um eine vorgegebene Verzögerungszeitspanne verzögert.

Die Erfindung basiert auf einigen grundlegenden Erkenntnissen, die im folgenden näher diskutiert werden sollen:

Erstens: im Stand der Technik wird davon ausgegangen, daß mit dem ersten Abtastwert ein bloßes Rausch-Signal gewonnen wird, welches keinerlei Bildinformation enthält, und daß man durch Subtrahieren dieses reinen Rausch-Signals von dem zweiten Abtastwert dann im wesentlichen die reine Bildinformation erhält. Das durch kTC-Noise verursachte Rausch-Signal ist ein Zufallssignal, welches eine beim RESET-Vorgang eingefrorene Amplitude hat, die während des gesamten nachfolgenden Belichtungszeitraums unverändert bleibt. Dementsprechend enthält also auch ein gegenüber dem RESET verzögert gewonnenes erstes Abtastsignal exakt den durch kTC-Rauschen verursachten Rauschsignalanteil, der dem im RESET-Zeitpunkt gewonnenen Rausch-Signal entspricht. Durch Subtrahieren des - erfindungsgemäß gegenüber dem RESET verzögert gewonnenen - ersten Abtastsignals von dem zweiten Abtastsignal erhält man also ebenfalls ein von dem kTC-Rauschen befreites Nutzsignal.

Der in dem verzögert gewonnenen ersten Abtastsignal enthaltene Bildanteil geht zwar bei dem Subtraktionsvorgang verloren, jedoch ist dieser Verlust vernachlässigbar im Hinblick auf die vervielfachte Helligkeitsdynamik, wie weiter unten noch näher ausgeführt wird.

Zweitens: wie oben erwähnt, kommt bei einem belichteten Bildsensor zu den verschiedenen Rauschanteilen noch das Photonenrauschen hinzu. Bei starker Helligkeit, insbesondere bei Helligkeiten, bei denen der CMOS-Bildsensor zur Sättigung neigt, ist der Anteil des Photonenrauschens derart groß, daß demgegenüber das - von der Helligkeit unabhängige - kTC-Rauschen untergeht. Aus diesem Grund spielt das kTC-Rauschen bei Bildsignalen, die durch große Helligkeit zustandekommen, eine untergeordnete Bedeutung.

Wenn man von dem am Ende des Belichtungszeitraums gewonnenen zweiten Abtastwert den ersten Abtastwert subtrahiert, so erhält man zwar ein von dem RESET-Rauschen befreites Signal, allerdings ist dieses Signal im Vergleich zum Stand der Technik, bei dem der erste Abtastwert unmittelbar nach dem RESET erfaßt wird, etwas verringert, und zwar um die Bildinformations-Komponente. Wenn man - wie in einer bevorzugten Ausführungsform der Erfindung vorgesehen - die Verzögerungszeitspanne so wählt, daß sie etwa 1% bis 20%, vorzugsweise 2% bis 10% des gesamten Belichtungszeitraums entspricht, so verringert sich im Normalbetrieb die Amplitude des Nutzsignals aufgrund der Subtraktion um etwa diesen prozentualen Anteil.

Im Gegenzug wird allerdings ein erheblicher Vorteil erreicht, nämlich eine vergrößerte Helligkeitsdynamik des Bildsensors. Wenn bei großer Helligkeit ein Pixel sehr schnell in Sättigung geht, das heißt seine obere mögliche Ladungsgrenze erreicht, so ist das von diesem Pixel stammende Nutzsignal unbrauchbar, da das Sättigungssignal praktisch keine Information mehr darüber enthält, wie stark die Belichtung innerhalb der Belichtungszeitspanne war.

Erfindungsgemäß kann in solchen Situationen das erste Abtastsignal als Informationsquelle herangezogen werden. Zwar ist das erste Abtastsignal noch mit dem - bei großen Helligkeiten vernachlässigbaren-RESET-Rauschen behaftet, allerdings enthält es auch einen Informationssignalanteil, wobei die Signalamplitude dadurch verfälscht ist, daß der Belichtungszeitraum für das erste Abtastsignal nur der Verzögerungszeitspanne entspricht. Da der ursprüngliche Belichtungszeitraum einerseits und die Verzögerungszeitspanne andererseits jedoch bekannt sind, kann man das erste Abtastsignal mit einem entsprechenden Faktor multiplizieren, um so den ersten Abtastwert auf einen Wert zu extrapolieren, der einem Signal bei voller ursprünglicher Belichtungszeit entspricht.

Die obigen Betrachtungen zeigen auch, daß man wegen der geringen Signalamplitude des ersten Absatzwerts einen erheblichen Spielraum hat, bis zu dem hin man dieses erste Abtastsignal auch bei extrem großen Helligkeiten als Informationssignal nutzen kann. Wenn die Verzögerungszeitspanne zum Beispiel 10% des eigentlichen Belichtungszeitraums entspricht, so kann man unter der Annahme, daß der zweite Abtastwert gerade der Sättigungssignalamplitude entspricht, die Helligkeitsdynamik des Bildsensors um circa den Faktor 10 verbessern. Erst bei einer derart starken Helligkeit würde auch der erste Abtastwert die Sättigungsgrenze erreichen.

Um den ersten Abtastwert in einer bevorzugten Ausgestaltung der Erfindung tatsächlich nutzen zu können, kann man den zweiten Abtastwert mit einem Schwellenwert vergleichen. Ist der Abtastwert höher als der Schwellenwert, kann man den ersten Abtastwert mit einem entsprechenden Skalierungs-Faktor (abgeleitet von dem Verhältnis des eigentlichen Belichtungszeitraums zu der Verzögerungszeitspanne) multiplizieren und den so gewonnenen Wert als Nutzsignal hernehmen.

Alternativ kann man aus dem ersten Abtastwert unter Heranziehung des Skalierungs-Faktors einen Erwartungswert für den zweiten Abtastwert ermitteln. Wenn dieser Erwartungswert über einem gewissen Schwellenwert liegt, kann man dann aus dem ersten Abtastwert in der oben beschriebenen Weise das Nutzsignal ermitteln.

Die erfindungsgemäße Digitalkamera kann also - bei geringen und mittleren Helligkeiten - einerseits wie eine herkömmliche Kamera arbeiten, sie arbeitet - bei mittleren und größeren Helligkeiten - in einer neuen Betriebsweise, bei der das durch das CDS-Verfahren ermittelte Nutzsignal ersetzt wird durch ein nur aus dem ersten Abtastwert abgeleitetes Nutzsignal. In der Praxis kann es möglicherweise zu unerwünschten Bildkanten oder -stufen kommen, nämlich dann, wenn ein plötzlicher Übergang von der einen zur anderen Betriebsweise stattfindet. Aus diesem Grund ist erfindungsgemäß vorgesehen, daß der Übergang zwischen den beiden oben erwähnten Betriebsarten allmählich oder fließend erfolgt. Dementsprechend wird abhängig von der aus dem ersten und/oder dem zweiten Abtastwert hergeleiteten Helligkeit als Nutzsignal ausgegeben:
a) in einem Bereich geringer Helligkeit: die Differenz der Abtastwerte;
b) in einem Bereich großer Helligkeit: der ausschließlich aus dem ersten Abtastwert hergeleitete Wert; und
c) in einem Bereich mittlerer Helligkeit: ein aus den Werten gemäß a) und b) gewonnener, gewichteter Mischwert.

Das oben angesprochene "fixed pattern noise", welches genau genommen eine zeitlich konstante Störquelle und kein statistisches Rauschen darstellt, wird erfindungsgemäß dadurch berücksichtigt, daß ein Dunkelwert-Offset-Speicher vorgesehen ist, und daß von dem ersten Abtastwert eines jeweiligen Pixels ein zu diesem Pixel gehöriger, in dem Dunkelwert-Offset-Speicher vorab gespeicherter Offsetwert subtrahiert wird. Man kann einmal vor Inbetriebnahme der Digitalkamera durch Aufnahme bei unbelichtetem Sensor für die Pixel des CMOS-Bildsensors die Offset-Werte speichern, um sie dann bei jeder Bildausgabe von den ersten Abtastwerten entsprechender Pixel zu subtrahieren. Das Speichern der Dunkelwert-Offsets läßt sich auch von Zeit zu Zeit wiederholen um die Werte zu aktualisieren.

Die Erfindung schafft außerdem ein Verfahren zum Ansteuern eines CMOS-Bildsensors nach dem sogenannten CDS-Verfahren, bei dem Pixel des Bildsensors gegen Anfang und gegen Ende eines Belichtungszeitraums abgetastet werden, und durch Subtrahieren des ersten Abtastwerts von dem zweiten Abtastwert ein Nutzsignal gewonnen wird, wobei erfindungsgemäß vorgesehen ist, daß der erste Abtastwert gegenüber dem RESET nach einer vorbestimmten Verzögerungszeitspanne mit verwertbarer Bildinformation gewonnen wird.

Im folgenden wird ein Ausführungsbeispiel der Erfindung anhand der Zeichnung näher erläutert. Es zeigen:
Figur 1 ein Blockdiagramm einer Digitalkamera mit zugehöriger Elektronik zur Durchführung einer CDS-Korrektur,
Figur 2 den Spannungsverlauf entsprechend der Zunahme der Ladungsmenge in einem Pixel eines Bildsensors entsprechend einer Ausführungsform der Erfindung, und
Figur 3 einen Signalverlauf ähnlich wie Figur 2, jedoch für einen CMOS-Bildsensor gemäß Stand der Technik.

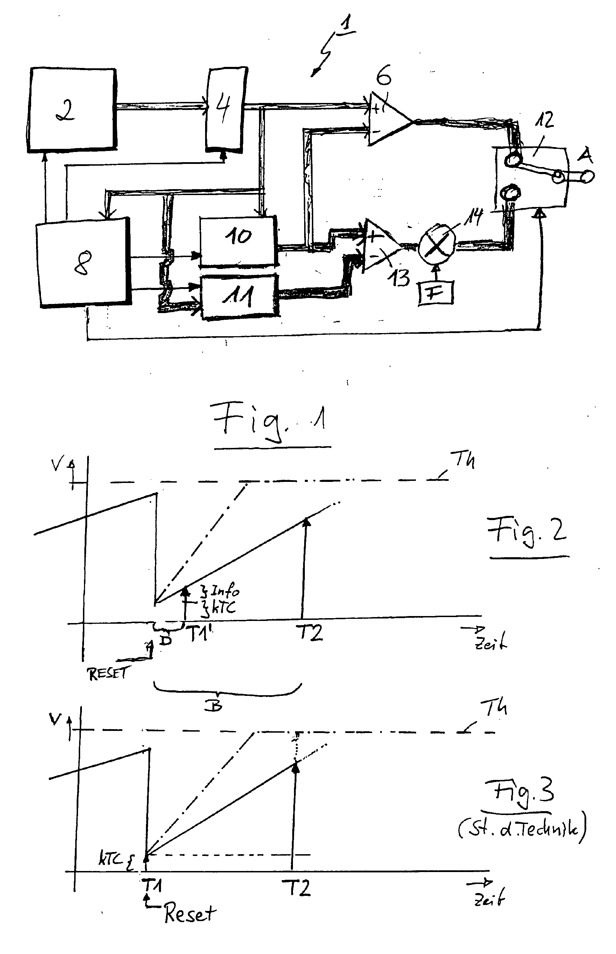

Figur 1 zeigt eine elektrische Schaltung 1 einer Digitalkamera mit einem CMOS-Bildsensor 2, der von einer Steuereinrichtung 8 gesteuert wird, und dem ein Analog-Digital-Wandler 4 nachgeschaltet ist. Der Analog-Digital-Wandler 4 setzt die Analogsignale vom Ausgang des CMOS-Bildsensors 2 in Digitalwerte um, die dann unter Steuerung durch die Steuereinrichtung 8 in einem Dunkelbild-Speicher 10 gespeichert werden. Die gespeicherten Werte in dem Dunkelbild-Speicher 10 entsprechen den digitalisierten Spannungswerten für die einzelnen Pixel des CMOS-Sensorelements 2. Diese Spannungswerte werden nach einem RESET-Signal durch eine erste Abtastung gewonnen, gesteuert durch die Steuereinrichtung 8.

Die bei einer zweiten Abtastung am Ende eines Belichtungszeitraums gewonnenen und digitalisierten Abtastwerte werden von dem Subtrahierer 6 zu einem Differenzsignal gebildet, indem die in dem Dunkelbild-Speicher 10 gespeicherten ersten Abtastwerte pixelweise und digital von den digitalen zweiten Abtastwerten subtrahiert werden, wiederum unter Steuerung durch die Steuereinrichtung 8. Das Differenzsignal am Ausgang des Subtrahierers 6 wird über einen ersten Eingang eines Schalters 12 einem Nutzsignal-Ausgang A zugeleitet.

Die in dem Dunkelbild-Speicher 10 gespeicherten ersten Abtastwerte werden außerdem einem Multiplizierer 14 zugeleitet, wo die Abtastwerte mit einem Skalierungs-Faktor F multipliziert werden.

Vor dem Multiplizieren wird jeder Pixelwert aus dem Dunkelbild-Speicher 100 bezüglich des vorerwähnten "fixed pattern noise" korrigiert. Hierzu werden in einem Dunkelwert-Offset-Speicher (11) für jedes Pixel des CMOS-Bildsensors 2 vor der Inbetriebnahme der Digitalkamera Offset-Werte gespeichert, die für die einzelnen Pixel des CMOS-Bildsensors 2 unterschiedlich sind. Bei jedem Auslesevorgang für den Bildspeicher 10 werden auch die Werte aus dem Dunkelwert-Offset-Speicher synchron ausgelesen. Die Werte aus den Speichern 10 und 11 werden von einem Subtrahierer 13 subtrahiert, und der Differenzwert, also der von dem "fixed pattern noise" befreite erste Abtastwert aus dem Bildspeicher 10 wird dem Multiplizierer 14 zugeleitet, um mit dem Skalierungs-Faktor F multipliziert zu werden.

Die multiplizierten ersten Abtastwerte werden einem zweiten Eingang des Schalters 12 zugeführt. Die Stellung des Schalters 12 wird von der Steuereinrichtung 8 ausgewählt, abhängig von einem Erwartungswert für den zweiten Abtastwert. Dieser Erwartungswert wird von der Steuereinrichtung 8 aus den jeweiligen ersten Abtastwerten errechnet. Ist die Amplitude des jeweiligen ersten Abtastwerts so groß, daß von dem zweiten Abtastwert erwartet werden kann, daß dieser über einem Sättigungs-Schwellenwert Th liegt, so schaltet die Steuereinrichtung 8 den Schalter 12 in die untere Stellung, demzufolge am Nutzsignal-Ausgang A ein Nutzsignal ausgegeben wird, welches durch Multiplizieren des ersten Abtastwerts mit dem Faktor F gewonnen wird.

Figur 2 zeigt einen Abtastvorgang im einzelnen. Bevor auf Figur 2 näher eingegangen wird, soll anhand der Figur 3 der Stand der Technik erläutert werden. Es wird hier insbesondere Bezug genommen auf die eingangs genannten US-Patentschriften, die hier als durch Bezugnahme inkorporiert angesehen werden, insbesondere bezüglich des "Correlated Double Sampling"-Verfahrens (CDS-Verfahrens).

Gemäß Figur 3 sammelt sich in einem der Pixel eine Ladung, die von einem hier nicht dargestellten Kondensator in eine Spannung V umgesetzt wird. Je größer die Helligkeit ist, welcher das betrachtete Pixel ausgesetzt ist, desto steiler steigt die Spannung an. Zu einem gegebenen Zeitpunkt wird der CMOS-Bildsensor 2 nach Figur 1 durch einen von der Steuereinrichtung 8 ausgegebenen RESET-Impuls pixelweise zurückgesetzt. Hierdurch werden sämtliche Restladungen aus den einzelnen Pixeln abgeleitet.

Aufgrund des RESET-Impulses sinkt die Spannung V gemäß Figur 3 schlagartig auf einen gewissen Wert ab, der hier mit kTC bezeichnet ist und der Rauschsignalamplitude entspricht, hauptsächlich zurückzuführen auf das RESET-Rauschen.

Gemäß der durchgezogenen Linie in Figur 3 steigt nun die im Zeitpunkt T1 bereits zum ersten Mal abgetastete Spannung V weiter an, abhängig von der Helligkeit, der das Pixel ausgesetzt ist. Nach einem gegebenen Belichtungszeitraum B erfolgt eine zweite Abtastung der Spannung V zu einem Zeitpunkt T2. Die Signalamplitude im Zeitpunkt T2 ist ebenfalls mit der Rauschsignalamplitude kTC behaftet. Durch Subtraktion des bei T1 gewonnenen ersten Abtastwerts von dem bei T2 gewonnenen zweiten Abtastwert wird die Rauschsignalkomponente beseitigt.

Wie weiterhin in Figur 3 durch ein strichpunktierte Linie dargestellt ist, würde bei etwas erhöhter Helligkeit an dem betrachteten Pixel die Spannung nach etwa zwei Drittel des Belichtungszeitraums B bereits die Sättigungsgrenze Th erreichen. Ein zum Zeitpunkt T2 gewonnener Abtastwert wäre dann unbrauchbar.

Gemäß Figur 2 wird ebenfalls das betrachtete Pixel durch den RESET-Impuls zurückgesetzt, so daß der Spannungswert auf eine Rauschsignalamplitude abnimmt, in Figur 2 ebenfalls mit kTC bezeichnet.

Im Gegensatz zum Stand der Technik erfolgt aber die erste Abtastung nicht bei dem oder unmittelbar nach dem RESET-Impuls, sondern um eine vorbestimmte Verzögerungszeitspanne D verzögert im Zeitpunkt T1'. Zu diesem Zeitpunkt hat sich durch die Belichtung des Pixels bereits eine gewisse Ladungsmenge angesammelt, die einer gewissen Spannung entspricht, in Figur 2 mit "Info" bezeichnet, um zu verdeutlichen, daß das im Zeitpunkt T1' abgetastete Signal Information über die Helligkeit enthält.

Wenn nun gemäß Figur 2 die Korrektur durch Subtraktion der Abtastwerte bei T2 und T1' erfolgt, ist das gewonnene Differenzsignal von der Rauschsignalkomponente kTC befreit, ist aber im Vergleich zu dem in Figur 3 dargestellten Fall etwas geringer, nämlich um den Wert, der in Figur 2 mit "Info" bezeichnet ist.

Es soll nun der Fall betrachtet werden, daß die Helligkeit an dem betreffenden Pixel so groß ist, daß die Signalspannung V entsprechend der strichpunktierten Linie sehr stark steigt. Das im Zeitpunkt T2 gewonnene zweite Abtastsignal wäre dann unbrauchbar. Erfindungsgemäß wird nun ausschließlich das im Zeitpunkt T1' erhaltene erste Abtastsignal als Nutzsignal verwendet. Es erfolgt eine Multiplikation mit einem Skalierungsfaktor F, der etwa den Wert B/D besitzt, um den Umstand zu berücksichtigen, daß die Belichtungszeit im Zeitpunkt T1' gegenüber der eigentlichen Belichtungszeit stark verkürzt ist und diese Verkürzung kompensiert werden muß.

Am Ausgang A in Figur 1 erhält man also je nach Helligkeit entweder ein Differenzsignal, gebildet durch Subtrahieren des ersten Abtastwerts bei T1' von dem zweiten Abtastwert bei T2', oder ein Signal, welches aus lediglich dem ersten Abtastwert bei T1' gewonnen wird.

Aus Figur 2 ist ersichtlich, daß die Helligkeitsdynamik des Bildsensors gemäß der Erfindung im Vergleich zum Stand der Technik um ein Vielfaches verbessert ist; denn die Spannung V müßte extrem steil ansteigen, um bis zu dem Zeitpunkt T1' der ersten Abtastung den oberen Sättigungswert Th zu erreichen.

Der in Figur 1 dargestellte Schalter 12 ermöglicht nur die beiden Alternativen "Differenzsignal" einerseits oder "aus erstem Abtastwert abgeleitetes Nutzsignal" andererseits. Um Bildkanten oder -stufen zu vermeiden, kann man den Schalter 12 nach Figur 1 durch eine Schaltung ersetzen, welche einen fließenden Übergang zwischen den beiden genannten Betriebsarten ermöglicht. In einem mittleren Helligkeitsbereich kann aus den beiden Nutzsignal-Arten "Differenzsignal" einerseits und "aus erstem Abtastwert hergeleitetes Nutzsignal" andererseits ein gewichteter Mittelwert gebildet werden, wobei das Gewicht in der Nähe des Bereichs geringer Helligkeit für das "Differenzsignal" größer ist als für das aus dem ersten Abtastwert hergeleitete Nutzsignal. In der Nähe des Bereichs großer Helligkeit ist die Gewichtsverteilung dann umgekehrt. Hierdurch erhält man einen fließenden Übergang zwischen den beiden Betriebsarten.

## Patentansprüche

1. Digitalkamera mit einem CMOS-Bildsensor (2), mit einer Mehrzahl von Pixeln, die innerhalb eines Belichtungszeitraums (B) jeweils eine von der Helligkeit abhängige Ladung speichern, die unter Steuerung durch eine Steuereinrichtung (8) als Pixelsignal ausgegeben wird, und mit einer Korrektureinrichtung (6, 10), die nach einem Pixel-RESET des Bildsensors aus einem gegen Anfang und einem gegen Ende des Belichtungszeitraums für das Pixel erfaßten ersten bzw. zweiten Abtastwert die Differenz bildet und den um den ersten Abtastwert verminderten zweiten Abtastwert als Nutzsignal ausgibt, **dadurch gekennzeichnet, daß** die Steuereinrichtung (8) die Abtastung für den ersten Abtastwert gegenüber dem RESET um eine vorgegebene Verzögerungszeitspanne (D) verzögert.

2. Digitalkamera nach Anspruch 1, **dadurch gekennzeichnet, daß** die Verzögerungszeitspanne (D) etwa 1% bis 20%, vorzugsweise 2% bis 10% des Belichtungszeitraums (B) entspricht.

3. Digitalkamera nach einem der Ansprüche 1 oder 2, **dadurch gekennzeichnet, daß** der erste Abtastwert für die jeweiligen Pixel digital in einem Bildspeicher (10) gespeichert wird, und von dem zweiten, digitalen Abtastwert der gespeicherte, digitale Abtastwert digital subtrahiert wird.

4. Digitalkamera nach einem der Ansprüche 1 bis 3, **dadurch gekennzeichnet, daß** eine Vergleichereinrichtung den zweiten Abtastwert oder den ersten Abtastwert mit einem Schwellenwert (Th) vergleicht, und bei Übersteigen des Schwellenwerts der erste Abtastwert, vorzugsweise multipliziert mit einem Skalierungsfaktor, als Nutzsignal ausgegeben wird.

5. Digitalkamera nach Anspruch 4, **dadurch gekennzeichnet, daß** abhängig von der aus dem ersten und/oder dem zweiten Abtastwert hergeleiteten Helligkeit als Nutzsignal ausgegeben wird:
a) in einem Bereich geringer Helligkeit: die Differenz der Abtastwerte;
b) in einem Bereich großer Helligkeit: der ausschließlich aus dem ersten Abtastwert hergeleitete Wert; und
c) in einem Bereich mittlerer Helligkeit: ein aus den Werten gemäß a) und b) gewonnener, gewichteter Mischwert.

6. Digitalkamera nach einem der Ansprüche 3 bis 5, **dadurch gekennzeichnet, daß** ein Dunkelwert-Offset-Speicher (11) vorgesehen ist, und daß von dem ersten Abtastwert eines jeweiligen Pixels ein zu diesem Pixel gehöriger, in dem Dunkelwert-Offset-Speicher (11) vorab gespeicherter Offset-Wert subtrahiert wird.

7. Verfahren zum Ansteuern eines CMOS-Bildsensorsr (2) nach dem sogenannten CDS-Verfahren, bei dem Pixel des Bildsensors gegen Anfang und gegen Ende eines Belichtungszeitraums (B) abgetastet werden, und durch Subtrahieren des ersten Abtastwerts von dem zweiten Abtastwert ein Nutzsignal gebildet wird, **dadurch gekennzeichnet, daß** der erste Abtastwert gegenüber dem RESET nach einer vorbestimmten Verzögerungszeitspanne mit verwertbarer Bildinformation gewonnen wird.
